# EUROPÄISCHE PATENTSCHRIFT

(11) **EP 2 489 932 B1**
(45) Veröffentlichungstag und Bekanntmachung des Hinweises auf die Patenterteilung: **29.07.2015**
(21) Anmeldenummer: 11186857.6
(22) Anmeldetag: 27.10.2011
(51) Int. Cl.: F21V 31/04

(54) **Beleuchtungseinrichtung**
Illumination device
Dispositif d'éclairage

(30) Priorität: 17.02.2011 DE 102011000779
(43) Veröffentlichungstag der Anmeldung: 22.08.2012
(73) Patentinhaber: Insta Elektro GmbH, 58509 Lüdenscheid (DE)
(72) Erfinder: Schauer, Udo, 58849 Herscheid (DE); Melnik, Andrew, 44225 Dortmund (DE); Nockemann, Frank, 58511 Lüdenscheid (DE)

(56) Entgegenhaltungen:
- WO-A1-2009/124937
- WO-A2-2004/021460
- DE-A1-102007 006 440
- DE-U1-202006 002 797

## Beschreibung

Die vorliegende Erfindung geht von einer gemäß Oberbegriff des Hauptanspruches konzipierten Beleuchtungseinrichtung aus.

Derartige Beleuchtungseinrichtungen sind in der Regel dafür vorgesehen, innerhalb bzw. außerhalb von Gebäuden für die gezielte Ausleuchtung ihrer Umgebung, für die Anleuchtung von direkt in ihrer Umgebung befindlicher Gegenstände, für eine Orientierungs- bzw. Signalisierungsbeleuchtung und/oder für eine gezielte Einkoppelung von Licht in Gegenstände zu sorgen. Werden solche Beleuchtungseinrichtungen z. B. zum Einbau in Decken, Wänden, Fußböden, Gehwegen, Fahrwegen oder mobilen Gegenständen verwand, ist zum problemlosen Einbau oftmals eine kompakte Bauweise bei sehr robuster Ausführung notwendig.

Eine dem Oberbegriff des Hauptanspruches entsprechende Beleuchtungseinrichtung ist durch die WO 2004/021460 A2 bekannt geworden. Eine solche Beleuchtungseinrichtung weist mehrere auf einer Leiterplatte angeordnete, über diese an ein Versorgungsnetz anschließbaren Leuchtmittel auf, wobei die Leiterplatte zumindest teilweise in eine lichtdurchlässige erste Vergussmasse eingebettet ist, welche einen gezielten Lichtaustritt des von dem Leuchtmittel erzeugten Lichtes über zumindest einen Lichtaustrittsbereich ermöglicht und wobei die Leiterplatte senkrecht zum Lichtaustrittsbereich verlaufend, zumindest teilweise von der ersten lichtdurchlässigen Vergussmasse umgebend in dieser angeordnet ist. Zudem ist in der ersten Vergussmasse zumindest ein Lichtbeeinflussungselement angeordnet, welches an zumindest einer seiner beiden Hauptflächen Licht reflektierende Eigenschaften aufweist. Eine solche Beleuchtungseinrichtung weist jedoch eine beachtliche Bauhöhe auf, welche die Verwendung für bestimmte Anwendungsbereiche erheblich erschwert.

Zudem ist durch die DE 10 2009 014 514 A1 eine weitere Beleuchtungseinrichtung bekannt geworden. Bei dieser Beleuchtungseinrichtung sind mehrere Leuchtmittel auf einer Leiterplatte angeordnet, welche über diese an ein Versorgungsnetz anschließbar sind. Die Leiterplatte ist von einem, einen gezielten Lichtaustritt ermöglichenden Gehäuse umgeben, welches die Leuchtmittel vor aggressiven Umgebungsbedingungen, wie z. B. Feuchtigkeit, Staub, mechanischen Belastungen usw. wirkungsvoll schützt. Zu diesem Zweck kann der Innenraum der Beleuchtungseinrichtung mit Vergussmasse ausgefüllt sein. Zum Anschluss der Leiterplatte an das Versorgungsnetz ist ein Steckkontaktverbinder vorgesehen. Die Bauhöhe einer solchen Ausführung führt jedoch dazu, dass die Verwendung solcher Beleuchtungseinrichtungen auf Anwendungsbereiche beschränkt ist, die für solche Bauhöhen geeignet sind. Auch ist die Realisierung einer harmonischen Lichtauskopplung aus dem Lichtaustrittsbereich insbesondere dann vergleichsweise schwierig, wenn schmal ausgeführte, lang gestreckte Bauformen realisiert werden sollen.

Außerdem ist es durch die DE 10 2007 006 440 A1 bei einer Beleuchtungseinrichtung bekannt, außenseitig als Abschluss ein Gehäuse vorzusehen und den Lichtaustrittsbereich mit einer Lichtauskoppelstruktur zu versehen.

Des Weiteren ist es durch die 20 2006 002 797 U1 bei einer Beleuchtungseinrichtung vorbekannt, zumindest einen Teil der zur Funktion notwendigen Steuereinrichtung auf der Leiterplatte vorzusehen, auf der auch die Leuchtmittel angeordnet sind. Außerdem ist es bei dieser Beleuchtungseinrichtung bekannt, diese zum Anschluss an ein Versorgungsnetz mit einem Steckverbinder auszurüsten.

Zudem ist durch die WO 2009/124 937 A1 eine Beleuchtungseinrichtung bekannt geworden, bei der die Leuchtmittel als auf einer Leiterplatte angeordnete LEDs ausgeführt sind. Die Leiterplatte ist von einem Gehäuse aufgenommen, welches mit einer lichtdurchlässigen Vergussmasse ausgefüllt ist.

Der vorliegenden Erfindung liegt deshalb die Aufgabe zugrunde, eine Beleuchtungseinrichtung zu schaffen, bei welcher bei besonders kompakter Bauform auf einfache und kostengünstige Art und Weise eine harmonische Lichtauskopplung aus dem Lichtaustrittsbereich gewährleistet ist.

Diese Aufgabe wird durch die im Hauptanspruch angegebenen Merkmale gelöst. Bei einer solchermaßen ausgebildeten Beleuchtungseinrichtung ist besonders vorteilhaft, dass auf preisgünstige Art und Weise auch schmal ausgeführte, lang gestreckte Bauformen bei geringer Bauhöhe verwirklicht werden können. Zudem ist besonders vorteilhaft, dass die Leiterplatte mit ihren Bauteilen zuverlässig vor Feuchtigkeit, Staub und anderen Umwelteinflüssen geschützt ist.

Weitere vorteilhafte Ausgestaltungen des erfindungsgemäßen Gegenstandes sind in den Unteransprüchen angegeben. Anhand dreier Ausführungsbeispiele sei der erfindungsgemäße Gegenstand näher beschrieben, dabei zeigen:
- Fig. 1:: prinziphaft eine Beleuchtungseinrichtung gemäß ersten Ausführungsbeispiel
- Fig. 2:: prinziphaft eine Beleuchtungseinrichtung gemäß zweiten Ausführungsbeispiel
- Fig. 3:: prinziphaft eine Beleuchtungseinrichtung gemäß dritten Ausführungsbeispiel

Wie aus den Figuren hervorgeht, besteht eine solche Beleuchtungseinrichtung hauptsächlich aus einer mit mehreren Leuchtmitteln 1 bestückten Leiterplatte 2, welche schützend von einer lichtdurchlässigen ersten Vergussmasse 3 und einer lichtundurchlässigen zweiten Vergussmasse 4 umgeben ist.

Die Leiterplatte 2 ist senkrecht zum Lichtaustrittsbereich 5 verlaufend angeordnet. Der untere, dem Lichtaustrittsbereich 5 abgewandte, Teil der Leiterplatte 2 ist dabei von der lichtdurchlässigen ersten Vergussmasse 3 und der obere Teil der Leiterplatte 2 von der lichtundurchlässigen zweiten Vergussmasse 4 umgeben. Die ersten Vergussmasse 3 und die zweite Vergussmasse 4 sind dabei derart angeordnet, dass die Leiterplatte 2 zum größten Teil bzw. vollständig geschützt in diese eingebettet ist.

Die zweite Vergussmasse 4 bildet dabei einen Blickschutz im Sinne eines Lichtabschottungselementes, damit im Umfeld stehende Personen möglichst nicht direkt in die auf der Leiterplatte 2 angeordneten Leuchtmittel 1 schauen können. Störende punktuelle Lichteffekte, welche bei LEDs auftreten können, sind somit weitgehend vermieden. Zur gezielten Beeinflussung des von den als LEDs ausgebildeten Leuchtmitteln 1 ausgehenden Lichtes ist ein Lichtbeeinflussungselement 6 vorgesehen. Das Lichtbeeinflussungselement 6 ist von der lichtdurchlässigen ersten Vergussmasse 3 umgeben und weist quasi einen keilförmigen Querschnitt auf. Das Lichtbeeinflussungselement 6 hat durch seine Bauform die Wirkung, dass das von den als LEDs ausgebildeten Leuchtmitteln 1 abgestrahlte Licht besonders homogen über den Lichtaustrittsbereich 5 an die Umgebung abgegeben wird. Damit eine effektive Lichtbeeinflussung erfolgt, weist das Lichtbeeinflussungselement 6 an seiner dem Lichtaustrittsbereich 5 abgewandten Hauptfläche eine Licht reflektierende Eigenschaften aufweisende Beschichtung 7 auf. Über Leitungen L ist die Leiterplatte 2 bzw. sind die Leuchtmittel 1 an ein Versorgungsnetz anschließbar. Eine der Einfachheit halber nicht dargestellte Steuereinrichtung ist vorgesehen, um unterschiedliche Lichteffekte erzielen zu können.

Zur gezielten Lichtbeeinflussung kann die Licht reflektierende Hauptfläche des Lichtbeeinflussungselementes 6 zum Beispiel konvex und/oder konkav ausgebildete Bereiche aufweisen. Die Ausbildung der das Licht reflektierenden Hauptfläche lässt sich in ihrer Form selbstverständlich so gestalten, dass je nach Bedarf die am Lichtaustrittsbereich 5 erwünschten Lichtaustrittseigenschaften eintreten.

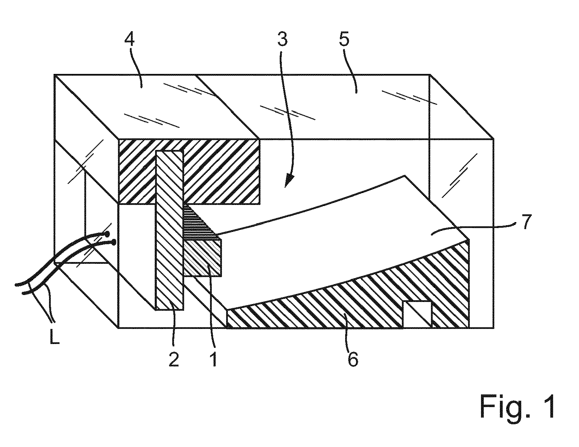

Wie insbesondere aus Figur 1 hervorgeht, ist das Lichtbeeinflussungselement 6 rampenförmig ausgebildet und an seiner dem Lichtaustrittsbereich 5 zugewandten Hauptfläche mit der Beschichtung 7 versehen. Das von den Leuchtmitteln 1 abgestrahlte Licht wird also auf das Lichtbeeinflussungselement 6 geleitet und an der mit der Beschichtung 7 versehenen Hauptfläche derart umgelenkt, dass das Licht gezielt über den Lichtaustrittsbereich 5 in besonders homogener Form an die Umgebung abgegeben wird. Der Effekt, dass das Licht in besonders homogener Form an die Umgebung abgegeben wird, wird im vorliegenden Fall dadurch unterstützt, dass durch die Form des Lichtbeeinflussungselementes 6 eine Lichtstrahlenverlängerung eintritt und die erste Vergussmasse 3 Licht streuende Eigenschaften aufweist. Im vorliegenden Fall weist der Lichtaustrittsbereich 5 eine schmal ausgeführte, lang gestreckte Bauform auf. Die Beleuchtungseinrichtung ist als schmal ausgeführte, lang gestreckte Lichtzeile ausgeführt.

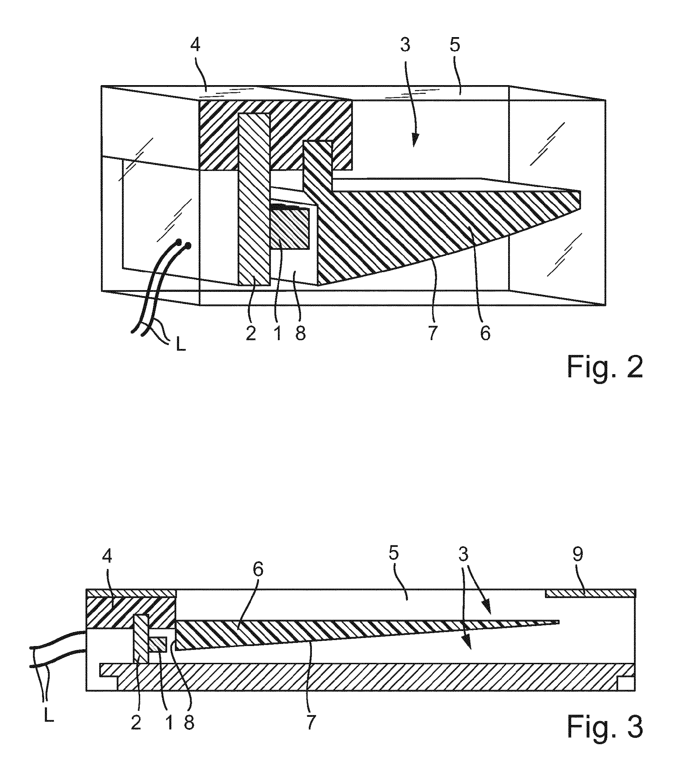

Wie insbesondere aus Figur 2 hervorgeht, ist das Lichtbeeinflussungselement 6 an der der Leiterplatte 2 zugewandten Schmalfläche 8 mit einer Lichteinkoppelstruktur versehen. Das von den Leuchtmitteln 1 abgestrahlte Licht wird also in das Lichtbeeinflussungselement 6 eingekoppelt und an der mit der Beschichtung 7 versehenen Hauptfläche derart umgelenkt, dass das Licht gezielt über den Lichtaustrittsbereich 5 in besonders homogener Form an die Umgebung abgegeben wird. Der Effekt, dass das Licht in besonders homogener Form an die Umgebung abgegeben wird, wird im vorliegenden Fall dadurch unterstützt, dass durch die Form des Lichtbeeinflussungselementes 6 eine Lichtstrahlenverlängerung eintritt und die erste Vergussmasse 3 Licht streuende Eigenschaften aufweist. Im vorliegenden Fall weist der Lichtaustrittsbereich 5 eine schmal ausgeführte, lang gestreckte Bauform auf. Die Beleuchtungseinrichtung ist als schmal ausgeführte, lang gestreckte Lichtzeile ausgeführt.

Wie insbesondere aus Figur 3 hervorgeht, ist das Lichtbeeinflussungselement 6 an der der Leiterplatte 2 zugewandten Schmalfläche 8 mit einer Lichteinkoppelstruktur versehen. Das von den Leuchtmitteln 1 abgestrahlte Licht wird also in das Lichtbeeinflussungselement 6 eingekoppelt und an der mit der Beschichtung 7 versehenen Hauptfläche derart umgelenkt, dass das Licht gezielt über den Lichtaustrittsbereich 5 in besonders homogener Form an die Umgebung abgegeben wird. Der Effekt, dass das Licht in besonders homogener Form an die Umgebung abgegeben wird, wird im vorliegenden Fall dadurch unterstützt, dass durch die Form des Lichtbeeinflussungselementes 6 eine Lichtstrahlenverlängerung eintritt und die erste Vergussmasse 3 Licht streuende Eigenschaften aufweist. Im vorliegenden Fall weist der Lichtaustrittsbereich 5 eine runde Bauform auf. Die Beleuchtungseinrichtung ist als rund ausgeführter Lichtpunkt ausgeführt. Die den Lichtaustrittsbereich 5 aufweisende äußere Sichtfläche ist mit einem ringförmig ausgebildeten Designteil 9 versehen.

## Patentansprüche

1. Beleuchtungseinrichtung mit zumindest einem, auf einer Leiterplatte (2) angeordneten, über diese an ein Versorgungsnetz anschließbaren Leuchtmittel (1), wobei die Leiterplatte (2) zumindest teilweise in eine lichtdurchlässige erste Vergussmasse (3) eingebettet ist, welche einen gezielten Lichtaustritt des von dem Leuchtmittel (1) erzeugten Lichtes über zumindest einen Lichtaustrittsbereich (5) ermöglicht, wobei die Leiterplatte (2) senkrecht zum Lichtaustrittsbereich (5) verlaufend, zumindest teilweise von der ersten lichtdurchlässigen Vergussmasse (3) umgeben, in dieser angeordnet ist und dass in der ersten Vergussmasse (3) zumindest ein Lichtbeeinflussungselement (6) angeordnet ist, welches an zumindest einer seiner beiden Hauptflächen Licht reflektierende Eigenschaften aufweist, **dadurch gekennzeichnet, dass** die Leiterplatte (2) bereichsweise von einem, zumindest teilweise aus einer lichtundurchlässigen zweiten Vergussmasse (4) bestehenden, Lichtabschottungselement umgeben ist, und dass der außenseitige Abschluss zumindest zum Teil aus der ersten Vergussmasse (3) und/oder der zweiten Vergussmasse (4) besteht.

2. Beleuchtungseinrichtung nach Anspruch 1, **dadurch gekennzeichnet, dass** zumindest eine der beiden Hauptflächen des Lichtbeeinflussungselementes (6) mit einer Licht reflektierenden Beschichtung (7) versehen ist.

3. Beleuchtungseinrichtung nach einem der Ansprüche 1 oder 2, **dadurch gekennzeichnet, dass** zumindest ein Lichtbeeinflussungselement (6) an zumindest einer seiner beiden Schmalflächen (8) mit einer Lichteinkoppelstruktur versehen ist.

4. Beleuchtungseinrichtung nach einem der Ansprüche 1 bis 3, **dadurch gekennzeichnet, dass** zumindest ein auf der Leiterplatte (2) angeordnetes Leuchtmittel (1) als LED ausgeführt ist.

5. Beleuchtungseinrichtung nach einem der Ansprüche 1 bis 4, **dadurch gekennzeichnet, dass** zumindest ein auf der Leiterplatte (2) angeordnetes Leuchtmittel (1) als OLED ausgeführt ist.

6. Beleuchtungseinrichtung nach einem der Ansprüche 1 bis 5, **dadurch gekennzeichnet, dass** zumindest ein auf der Leiterplatte (2) angeordnetes Leuchtmittel (1) mit einer Steuerungseinrichtung in Verbindung steht.

7. Beleuchtungseinrichtung nach Anspruch 6, **dadurch gekennzeichnet, dass** zumindest ein Teil der für das zumindest eine Leuchtmittel (1) vorgesehenen Steuerungseinrichtung auf der Leiterplatte (2) angeordnet ist.

8. Beleuchtungseinrichtung nach Anspruch 6, **dadurch gekennzeichnet, dass** zumindest ein Teil der für das zumindest eine Leuchtmittel (1) vorgesehenen Steuerungseinrichtung ortsfern angeordnet ist.

9. Beleuchtungseinrichtung nach einem der Ansprüche 1 bis 8, **dadurch gekennzeichnet, dass** zum außenseitigen Abschluss ein Gehäuse vorgesehen ist.

10. Beleuchtungseinrichtung nach einem der Ansprüche 1 bis 9, **dadurch gekennzeichnet, dass** zumindest ein, zumindest eine äußere Sichtfläche bildendes Designteil (9) vorgesehen ist.

11. Beleuchtungseinrichtung nach einem der Ansprüche 1 bis 10, **dadurch gekennzeichnet, dass** zum Anschluss an ein Versorgungsnetz und/oder eine Steuereinrichtung ein Steckkontaktverbinder vorgesehen ist.

12. Beleuchtungseinrichtung nach einem der Ansprüche 1 bis 11, **dadurch gekennzeichnet, dass** zumindest ein Lichtaustrittsbereich (5) eine Lichtauskoppelstruktur aufweist.

13. Beleuchtungseinrichtung nach einem der Ansprüche 1 bis 12, **dadurch gekennzeichnet, dass** das Lichtbeeinflussungselement (6) einen keilförmigen Querschnitt aufweist.

14. Beleuchtungseinrichtung nach einem der Ansprüche 1 bis 13, **dadurch gekennzeichnet, dass** die Licht reflektierende Eigenschaften aufweisende Hauptfläche des Lichtbeeinflussungselementes (6) zumindest teilweise konvex verlaufend ausgeführt ist.

15. Beleuchtungseinrichtung nach einem der Ansprüche 1 bis 13, **dadurch gekennzeichnet, dass** die Licht reflektierende Eigenschaften aufweisende Hauptfläche des Lichtbeeinflussungselementes (6) zumindest teilweise konkav verlaufend ausgeführt ist.

## Claims

1. Lighting unit with at least one luminaire (1), arranged on a printed circuit board (2) and to be connected to a supply network via this printed circuit board (2), in which the printed circuit board (2) is embedded at least partly in a translucent first casting compound (3) which allows a well-aimed light outlet of the light generated by the luminaire (1) via at least one light outlet area (5), in which the printed circuit board (2), arranged vertically to the light outlet area (5), surrounded at least partially by the first translucent casting compound (3), is arranged in the latter and that in the first casting compound (3) at least one light influencing element (6) is arranged whose at least one of two main surfaces has light-reflecting characteristics, **characterized by the fact** that the printed circuit board (2) in certain areas is surrounded by a light seal element, at least partially consisting of a lightproof second casting compound (4), and that the outside protection at least partly consists of the first casting compound (3) and/or the second casting compound (4).

2. Lighting unit in accordance with Claim 1, **characterized by the fact** that at least one of the two main surfaces of the light influencing element (6) is provided with a light-reflecting coating (7).

3. Lighting unit in accordance with Claim 1 or Claim 2, **characterized by the fact** that at least one light influencing element (6) is provided with a light coupling structure at at least one of its two narrow sides (8).

4. Lighting unit in accordance with any of Claims 1 to 3, **characterized by the fact** that at least one luminaire (1) arranged on the printed circuit board (2) is designed as LED.

5. Lighting unit in accordance with any of Claims 1 to 4, **characterized by the fact** that at least one luminaire (1) arranged on the printed circuit board (2) is designed as OLED.

6. Lighting unit in accordance with any of Claim 1 to 5, **characterized by the fact** that at least one luminaire (1) arranged on the printed circuit board (2) is linked with a control unit.

7. Lighting unit in accordance with Claim 6, **characterized by the fact** that at least one part of the control unit provided for the at least one luminaire (1) is arranged on the printed circuit board (2).

8. Lighting unit in accordance with Claims 6, **characterized by the fact** that at least one part of the control unit provided for the at least one luminaire (1) is located remotely.

9. Lighting unit in accordance with and of Claims 1 to 8, **characterized by the fact** that for protection to the outside a housing is provided.

10. Lighting unit in accordance with any of Claims 1 to 9, **characterized by the fact** that at least one design part (9) is provided forming at least one outer visible surface.

11. Lighting unit in accordance with any of Claims 1 to 10, **characterized by the fact** that for connection to a supply network and/or a control unit a plug connector is provided.

12. Lighting unit in accordance with any of Claims 1 to 11, **characterized by the fact** that at least one light outlet area (5) is provided with a light decoupling structure.

13. Lighting unit in accordance with any of Claims 1 to 12, **characterized by the fact** that the light influencing element (6) has a wedge-shaped cross section.

14. Lighting unit in accordance with any of Claims 1 to 13, **characterized by the fact** that the main surface of the light influencing element (6), having light-reflecting characteristics, is at least partly designed in convex shape.

15. Lighting unit in accordance with any of Claims 1 to 13, **characterized by the fact** that the main surface of the light influencing element (6), having light-reflecting characteristics, is at least partly designed in concave shape.

## Revendications

1. Dispositif d'éclairage comportant au moins une ampoule (1) placée sur une carte à circuits imprimés (2), pouvant être raccordée à un réseau d'alimentation par l'intermédiaire de celle-ci, la carte à circuits imprimés (2) étant immergée au moins en partie dans une première masse de moulage (3) laissant passer la lumière, masse permettant, par l'intermédiaire d'au moins un domaine de sortie de la lumière (5), une sortie ciblée de la lumière produite par l'ampoule (1), la carte à circuits imprimés (2), perpendiculaire au domaine de sortie de la lumière (5) et au moins en partie immergée dans la première masse de moulage (3) laissant passer la lumière, étant placée dans celle-ci, et au moins un élément permettant d'influencer la lumière (6) étant placé dans la première masse de moulage (3), élément présentant sur au moins l'une de ses deux surfaces principales des propriétés réfléchissantes, **caractérisé en ce que** la carte à circuits imprimés (2) est entourée en certains endroits par un élément de blocage de la lumière composé au moins en partie par une seconde masse de moulage (4) ne laissant pas passer la lumière, et **en ce que** la face extérieure se compose au moins en partie de la première masse de moulage (3) et/ou de la seconde masse de moulage (4).

2. Dispositif d'éclairage selon la revendication 1, **caractérisé en ce que** au moins une des deux surfaces principales de l'élément permettant d'influencer la lumière (6) est muni d'un revêtement réfléchissant la lumière (7).

3. Dispositif d'éclairage selon l'une des revendications 1 ou 2, **caractérisé en ce que** au moins un élément permettant d'influencer la lumière (6) est muni sur au moins l'une de ses surfaces étroites (8) d'une structure d'introduction de la lumière.

4. Dispositif d'éclairage selon l'une des revendications 1 à 3, **caractérisé en ce que** au moins une ampoule (1) placée sur la carte à circuits imprimés (2) est une LED.

5. Dispositif d'éclairage selon l'une des revendications 1 à 4, **caractérisé en ce que** au moins une ampoule (1) placée sur la carte à circuits imprimés (2) est une OLED.

6. Dispositif d'éclairage selon l'une des revendications 1 à 5, **caractérisé en ce que** au moins une ampoule (1) placée sur la carte à circuits imprimés (2) est en relation avec un dispositif de commande.

7. Dispositif d'éclairage selon la revendication 6, **caractérisé en ce que** au moins une partie du dispositif de commande prévu pour au moins l'ampoule (1) est placée sur la carte à circuits imprimés (2).

8. Dispositif d'éclairage selon la revendication 6, **caractérisé en ce que** au moins une partie du dispositif de commande prévu pour au moins l'ampoule (1) est disposée à distance.

9. Dispositif d'éclairage selon l'une des revendications 1 à 8, **caractérisé en ce que** un boîtier est prévu pour la fermeture extérieure.

10. Dispositif d'éclairage selon l'une des revendications 1 à 9, **caractérisé en ce que** au moins un élément design (9) est prévu pour former au moins une face visible extérieure.

11. Dispositif d'éclairage selon l'une des revendications 1 à 10, **caractérisé en ce que** un connecteur à fiches(s) est prévu pour le raccordement à un réseau d'alimentation et/ou un dispositif de commande.

12. Dispositif d'éclairage selon l'une des revendications 1 à 11, **caractérisé en ce que** au moins un domaine de sortie de la lumière (5) présente une structure de sortie de la lumière.

13. Dispositif d'éclairage selon l'une des revendications 1 à 12, **caractérisé en ce que** l'élément permettant d'influencer la lumière (6) est de section cunéiforme.

14. Dispositif d'éclairage selon l'une des revendications 1 à 13, **caractérisé en ce que** la surface principale de l'élément permettant d'influencer la lumière (6), présentant des propriétés de réflexion de la lumière, est réalisée au moins en partie de forme convexe.

15. Dispositif d'éclairage selon l'une des revendications 1 à 13, **caractérisé en ce que** la surface principale de l'élément permettant d'influencer la lumière (6), présentant des propriétés de réflexion de la lumière, est réalisée au moins en partie de forme concave.
